Europäisches Patentamt

European Patent Office

Office européen des brevets

(11) Veröffentlichungsnummer: **0 451 656 A2**

(19)

# (12) EUROPÄISCHE PATENTANMELDUNG

(21) Anmeldenummer: **91105118.3**

(22) Anmeldetag: **30.03.91**

(51) Int. Cl.⁵: **C08J 5/18, B32B 27/40,** //C08L75:04

(30) Priorität: **13.04.90 DE 4012006**

(43) Veröffentlichungstag der Anmeldung: **16.10.91 Patentblatt 91/42**

(84) Benannte Vertragsstaaten: **BE DE ES FR GB IT NL SE**

(71) Anmelder: **BAYER AG**

**W-5090 Leverkusen 1 Bayerwerk(DE)**

(72) Erfinder: **Wagner, Joachim, Dr.**
**Semmelweisstrasse 135**
**W-5000 Koeln 80(DE)**
Erfinder: **Rasshofer, Werner, Dr.**
**Leopold-Gmelin-Strasse 31**
**W-5000 Koeln 80(DE)**
Erfinder: **Dörner, Karl Heinz**
**Weilersgrund 26**
**W-5024 Pulheim(DE)**

(54) **Verfahren zur Herstellung von Folien-Innenauskleidungen von Kunststoff-Formen und die Verwendung der so ausgekleideten Formen.**

㉗ Ein Verfahren zur Herstellung von Folien-Innenauskleidungen von Formen zur Herstellung von Folien-ummantelten Kunststoff-Formkörpern durch Vakuumtiefziehen bei oberhalb 20 $^\circ$ C liegenden Temperaturen unter Verwendung von quasithermoplastischen Folien einer maximalen Dicke von 1 mm auf Basis von Polyisocyanat-Polyadditionsprodukten aus ausgewählten Ausgangsmaterialien und die Verwendung der so erhaltenen, innenverkleideten Formen zur Herstellung von Folien-ummantelten Kunststoff-Formteilen.

EP 0 451 656 A2

Die Erfindung betrifft ein neues Verfahren zur Herstellung von Folien-Innenauskleidungen von Formen für die Herstellung von Folien-ummantelten Kunststoff-Formteilen durch Vakuumtiefziehen unter Verwendung von nach dem Reaktionsspritzgußverfahren hergestellten Folien auf Basis von Polyisocyanat-Polyadditionsprodukten und die Verwendung der so ausgekleideten Formen zur Herstellung von Folien-ummantelten Kunststoff-Formkörpern, insbesondere solchen auf Basis von geschäumten Polyisocyanat-Polyadditionsprodukten.

Die Herstellung von quasi-thermoplastisch verarbeitbaren Polyisocyanat-Polyadditionsprodukten ist bereits bekannt (vgl. z.B. DE-OS 37 33 756, 38 09 524 oder 38 22 331. Gemäß diesen Vorveröffentlichungen werden aus quasi-thermoplastisch verarbeitbaren Polyisocyanat-Polyadditionsprodukten unter Anwendung von höheren Temperaturen und unter Anwendung von Überdruck Formkörper oder Folien hergestellt. Die hierbei zum Einsatz gelangenden Polyisocyanat-Polyadditionsprodukte können in den unterschiedlichsten Formen vorliegen. So wird beispielsweise in den Beispielen auch die Verformung von Platten einer Dichte von 4 mm unter Anwendung von Druck und höheren Temperaturen beschrieben.

Jetzt wurde überraschend gefunden, daß nach der Methode der Reaktionsspritzgußtechnik unter Verwendung von Ausgangsmaterialien der bereits in den zitierten Vorveröffentlichungen genannten Art auch dünne Folien einer maximalen Dicke von 1 mm, vorzugsweise von 0,3 bis 0,8 mm, hergestellt werden können, die zur Innenauskleidung von Kunststoff-Formen durch Vakuumtiefziehen geeignet sind.

Gegenstand der Erfindung ist daher ein Verfahren zur Herstellung von Folien-Innenauskleidungen von Formen zur Herstellung von Folien-ummantelten Kunststoff-Formkörpern durch Vakuumtiefziehen bei oberhalb 20°C liegenden Temperaturen unter Verwendung von quasi-thermoplastischen Folien einer maximalen Dicke von 1 mm, dadurch gekennzeichnet, daß man als quasi-thermoplastische Folien solche auf Basis von Polyisocyanat-Polyadditionsprodukten einer Dichte von mindestens 0,6g/cm³ verwendet, die durch Umsetzung von

a) organischen Polyisocyanaten,
b) Verbindungen mit einem Molekulargewicht von 1.800 bis 12,000, welche im statistischen Mittel mindestens 2,5 gegenüber Isocyanatgruppen reaktionsfähige Gruppen aufweisen, gegebenenfalls
c) Diaminen mit zwei primären und/oder sekundären, aromatisch gebundenen Aminogruppen des Molekulargewichtsbereichs 108 bis 400, sowie gegebenenfalls
d) gegebenenfalls Ethergruppen aufweisenden (Cyclo)-alkanpolyolen und/oder (Cyclo)-alkanpolyaminen des Molekulargewichtsbereichs 60 bis 1799, sowie gegebenenfalls
e) den aus der Polyurethanchemie an sich bekannten Hilfs- und Zusatzmitteln,
unter Einhaltung einer Isocyanatkennzahl von 60 bis 140 im Reaktionsspritzgußverfahren unter Verwendung von geschlossenen Plattenformen einer maximalen Höhe von 1 mm hergestellt worden sind, mit der Maßgabe, daß mindestens eine der Komponenten c) und/oder d) in einer solchen Menge mitverwendet wird, daß die Gesamtmenge der Komponenten c) und/oder d) mindestens 5 Gew.-%, bezogen auf das Gewicht der Komponente b), beträgt.

Gegenstand der Erfindung ist auch die Verwendung der so erhaltenen Folieninnenverkleideten Formen zur Herstellung von Folien-ummantelten Kunststoff-Formteilen.

Bei den beim erfindungsgemäßen Verfahren einzusetzenden Folien handelt es sich um solche einer Dichte von 0,6 bis 1,4, vorzugsweise 0,8 bis 1,2 g/cm³, einer maximalen Dicke von 1 mm, vorzugsweise einer Dicke von 0,3 bis 0,8 mm, die aus an sich bekannten Ausgangsmaterialien nach der Reaktionsspritzgußtechnik unter Verwendung von entsprechend dimensionierten Plattenformen hergestellt worden sind. Wegen der Mitverwendung von höher als difunktionellen Aufbaukomponenten handelt es sich bei den Polyisocyanat-Polyadditionsprodukten um vernetzte Kunststoffe, die keine echten Thermoplasten darstellen, da sie unter dem Einfluß von Hitze nicht schmelzen. Die Materialien werden daher als "quasi-thermoplastisch"bezeichnet, was zum Ausdruck bringen soll, daß die Folien lediglich so weit erweichen, daß sie unter dem Einfluß des zur Anwendung gelangenden Vakuums verformt, d.h. tiefgezogen werden können, ohne hierbei jedoch zu schmelzen. Ebenso sind die "quasi-thermoplastischen" Polyisocyanat-Polyadditionsprodukte des vorstehend genannten Standes der Technik keine echten Thermoplaste.

Als Komponente a) zur Herstellung der Folien eignen sich sowohl aliphatische als auch organische Polyisocyanate der an sich bekannten Art. Geeignet sind beispielsweise Polyisocyanate eines über 137, vorzugsweise bei 168 bis 290 liegenden Molekulargewichts mit ausschließlich (cyclo)-aliphatisch gebundenen Isocyanatgruppen wie beispielsweise 1,6-Diisocyanatohexan, 1,12-Diisocyanatododecan, 1,3-Diisocyanatocyclobutan, 1,3- und 1,4-Diisocyanato-cyclohexan, sowie beliebige Gemische dieser Isomeren, 1-Isocyanato-3,3,5-trimethyl-5-isocyanatomethylcyclohexan (IPDI), 2,4- und/oder 4,4'-Diisocyanatodicyclohexylmethan oder beliebige Gemische derartiger einfacher (cyclo)-

aliphatischer Polyisocyanate. Ebenfalls geeignet sind durch Urethan-, Allophanat-, Isocyanurat-, Harnstoff-, Biuret- und/oder Uretdiongruppen modifizierte Polyisocyanate auf Basis der beispielhaft genannten (cyclo)aliphatischen Diisocyanate oder auf Basis von deren Gemische. Gemische von unmodifizierten Diisocyanaten mit den genannten modifizierten Polyisocyanaten können ebenfalls als Komponente a) verwendet werden. Die beispielhaft genannten Polyisocyanate mit (cyclo)aliphatisch gebundenen Isocyanatgruppen sind oftmals wegen der Lichtechtheit der aus ihnen hergestellten Folien bevorzugt. Falls es hierauf nicht ankommt, sind selbstverständlich die üblichen aromatischen Polyisocyanate ebenfalls ausgezeichnet als Ausgangskomponente a) geeignet. Hierzu gehören beliebige aromatische Polyisocyanate mit einem NCO-Gehalt von 10 bis 50 Gew.-%, wie beispielsweise 2,4-Diisocyanatotoluol, 2,6-Diisocyanatotoluol, wie z.B. 1,2-Bis-(4-isocyanatophenyl)-ethan, Alkyl-, insbesondere Methyl-substituierte Diisocyanatodiphenylmethane der beispielsweise in EP-A 24 665 oder 46 556 beschriebenen An und insbesondere Polyisocyanate bzw. Polyisocyanatgemische der Diphenylmethanreihe. Beliebige Gemische derartiger Polyisocyanate können beim erfindungsgemäßen Verfahren ebenfalls verwendet werden. Bei den besonders bevorzugt einzusetzenden Polyisocyanaten oder Polyisocyanatgemischen handelt es sich um solche der Diphenylmethanreihe wie 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an 2,2'-Diisocyanatodiphenylmethan im allgemeinen 5 Gew.-% nicht übersteigt, um Polyisocyanatgemische, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können oder um Urethangruppen aufweisende Umsetzungsprodukte der zuletzt genannten Di- und/oder Polyisocyanate mit unterschüssigen Mengen an aliphatischen Polyhydroxylverbindungen des Molekulargewichtsbereichs 62 bis 700 wie z.B. Ethylenglykol, Trimethylolpropan, Propylenglykol, Dipropylenglykol oder Polypropylenglykolen des genannten Molekulargewichtsbereichs oder um durch partielle Carbodiimidisierung der Isocyanatgruppen der zuletzt genannten Di- und/oder Polyisocyanate modifizierte Di- und/oder Polyisocyanate.

Bei der Komponente b) handelt es sich um Verbindungen mit gegenüber Isocyanatgruppen reaktionsfähigen Gruppen des Molekulargewichtsbereichs 1.800 bis 12.000, vorzugsweise 3.000 bis 7.000, oder um Gemische derartiger Verbindungen, wobei die Komponente b) im Sinne der Isocyanat-Additionsreaktion eine mindestens bei 2,5, vorzugsweise bei 2,6 bis 4,0 und besonders bevorzugt bei 2,8 bis 3,0, liegende (mittlere) Funktionalität aufweist. Besonders gut als Komponente b) geeignete Verbindungen sind, diesen Ausführungen entsprechende Polyetherpolyole bzw. Gemische von Polyetherpolyolen wie sie in DE-AS 2 622 951, Kolonne 6, Zeile 65, bis Kolonne 7, Zeile 47, offenbart sind, wobei auch erfindungsgemäß solche Polyetherpolyole bevorzugt sind, deren Hydroxylgruppen zumindest zu 50 %, vorzugsweise zumindest zu 80 %, aus primären Hydroxylgruppen bestehen. Auch die in DE-AS 2 622 951 beispielhaft offenbarten, Hydroxylgruppen aufweisenden Polyester, Polythioether, Polyacetale, Polycarbonate oder Polyesteramide sind im Prinzip als erfindungsgemäße Komponente b) geeignet, sofern sie den oben gemachten Ausführungen entsprechen, jedoch gegenüber den Polyetherpolyolen weniger bevorzugt.

Als Ausgangskomponente b) ebenfalls gut geeignet sind, obigen Ausführungen entsprechende, Aminopolyether oder Gemische von Aminopolyethern, d.h., Polyether mit gegenüber Isocyanatgruppen reaktionsfähigen Gruppen, die sich zumindest zu 50 Äquivalent-%, vorzugsweise zumindest zu 80 Äquivalent-% aus primären und/oder sekundären, aromatisch oder aliphatisch, vorzugsweise aromatisch gebundenen Aminogruppen und zum Rest aus primären und/oder sekundären, aliphatisch gebundenen Hydroxylgruppen zusammensetzen. Geeignete derartige Aminopolyether sind beispielsweise die in EP-B-00 81 701, Kolonne 4, Zeile 26, bis Kolonne 5, Zeile 40, genannten Verbindungen. Ebenfalls als Ausgangskomponente b) geeignet, jedoch weniger bevorzugt, sind Aminogruppen aufweisende Polyester des obengenannten Molekulargewichtsbereichs.

Als Komponente b) können selbstverständlich auch beliebige Gemische der beispielhaft genannten Polyhydroxylverbindungen mit den beispielhaft genannten Aminopolyethern verwendet werden.

Bei der gegebenenfalls mitzuverwendenden Komponente c) handelt es sich um aromatische Diamine der in EP-B-00 81 701, Kolonne 5, Zeile 58, bis Kolonne 6, Zeile 34, beispielhaft genannten Art, wobei auch erfindungsgemäß die dort als bevorzugt herausgestellten Diamine bevorzugt sind.

Bei den gegebenenfalls als weitere Aufbaukomponenten d) mitzuverwendenden Polyolen oder Polyaminen handelt es sich um beliebige nichtaromatische Verbindungen mit mindestens zwei gegenüber Isocyanatgruppen reaktionsfähigen Gruppen des Molekulargewichtsbereichs 60 bis 1799, vorzugsweise 62 bis 500, insbesondere 62 bis 400. In Betracht kommen beispielsweise mehrwertige Alkohole wie sie in EP-B-00 81 701, Kolonne 9, Zeilen 32 bis 50, offenbart sind. Ferner in Betracht kommen beispielsweise auch Ethergruppen aufweisende aliphatische Polyamine, beispielsweise endständige primäre Aminogruppen aufweisende Polypropylenoxide des genannten Molekulargewichtsbereichs. In Betracht kommen auch cycloaliphatische Ringe aufweisende Polyole wie beispielsweise 1,4-Dihydroxycyclohexan oder 1,4-Bishydroxymethyl-cyclohexan und Polyamine wie beispielsweise 1,4-Cyclohexan-diamin, Isophorondiamin, Bis-(4-aminocyclohexyl)-methan, Bis-(3-methyl-4-aminocyclohexyl)-methan.

Es ist ein wesentlicher Punkt, daß bei der Herstellung der Folien mindestens eine der Komponenten c) oder d) zur Anwendung gelangt und zwar in solchen Mengen, daß der Gewichtsanteil der Komponenten c) und/oder d), bezogen auf das Gewicht der Komponente b), mindestens 5 Gew.-%, vorzugsweise mindestens 10 Gew.-%, beträgt. Besonders bevorzugt werden die Folien unter Verwendung von (cyclo)aliphatischen Polyaminen oder Polyolen der unter c) und d) genannten Art so hergestellt, daß deren Mengen so bemessen werden, daß in den Elastomeren das Molverhältnis von eingebauten Harnstoffgruppen zu eingebauten Urethangruppen bei mindestens 2:1 liegt.

Bei den bei der Herstellung der Folien gegebenenfalls mitzuverwendenden Hilfs- und Zusatzmitteln e) handelt es sich beispielsweise um innere Formtrennmittel, Katalysatoren für die Polyisocyanat-Polyadditionsreaktion, Treibmittel, oberflächenaktive Zusatzstoffe, Zellregler, organische und anorganische Pigmente, Farbstoffe, UV- und Thermo-Stabilisatoren, Weichermacher oder fungistatisch bzw. bakteriostatisch wirkende Substanzen, wie sie beispielsweise in EP-B-00 81 701, Kolonne 6, Zeile 40, bis Kolonne 9, Zeile 31, beispielhaft beschrieben sind.

Zu den gegebenenfalls mitzuverwendenden Hilfs- und Zusatzstoffen gehören die an sich bekannten Füll- und/oder Verstärkungsstoffe wie beispielsweise Bariumsulfat, Kieselgur, Schlämmkreide, Mica oder insbesondere Glasfasern, wobei diese Füll- und/oder Verstärkungsstoffe in Mengen von bis zu 80 Gew.-%, vorzugsweise bis zu 30 Gew.-%, bezogen auf das Gesamtgewicht der gefüllten bzw. verstärkten Folien, mitverwendet werden können. Bevorzugt wird jedoch ohne Füll- und Verstärkungsstoffe gearbeitet.

Die Herstellung der Folien erfolgt vorzugsweise nach dem Einstufen-Verfahren dergestalt, daß man die Polyisocyanatkomponente a) mit einem Gemisch der Komponenten b) bis e) unter Verwendung geeigneter Mischapparaturen vermischt und zur Reaktion bringt. Grundsätzlich ist es auch möglich, die Polyisocyanat-Polyadditionsprodukte nach einem "modifizierten Einstufenverfahren" umzusetzen, gemäß welchem man die Polyisocyanat-Komponente a) mit einem Teil der Komponente b) und gegebenenfalls der Komponente c) und/oder d) unter Bildung von NCO-Semiprepolymeren umsetzt, welche anschließend einstufig mit dem Gemisch der restlichen Komponenten zur Reaktion gebracht werden. Auch die Herstellung der Folien nach dem Prepolymerprinzip ist denkbar, wobei doch stets nach dem Reaktionsspritzgußverfahren unter Verwendung von geschlossenen Plattenformen der genannten Dicke gearbeitet wird. In allen Fällen liegt die NCO-Kennzahl (Anzahl der NCO-Gruppen dividiert durch die Anzahl an NCO-reaktiven Gruppen, multipliziert mit 100) bei 60 bis 140, vorzugsweise bei 80 bis 120, insbesondere 95 bis 115.

Wie bereits oben ausgeführt, wird vorzugsweise die Komponente d) (unter Einbeziehung der gegebenenfalls in der Komponente b) vorliegenden Aminogruppen) so bemessen, daß in den Elastomeren das Molverhältnis von Harnstoffgruppen zu Urethangruppen bei mindestens 2:1 liegt. Besonders bevorzugt liegt dieses Verhältnis bei mindestens 5:1. In der Praxis bedeutet dies, daß vorzugsweise die Komponente d) in einer Menge von 5 bis 50, vorzugsweise 10 bis 40 Gew.-% bezogen auf das Gewicht der Komponente b), eingesetzt wird.

Gewünschtenfalls können die Innenwände der Plattenformen vor der Herstellung der Folien mit an sich bekannten äußeren Trennmitteln beschichtet werden. Die Herstellung der Folien erfolgt im übrigen in völliger Analogie zu den bislang, beispielsweise aus DE-AS 2 622 951, US-PS 4 218 543 oder EP-B-00 81 701 beschriebenen Verfahrensweise der Reaktionsspritzgußtechnik bzw. der RIM-Technologie.

Gewünschtenfalls kann die Dicke der den Plattenformen entnommenen Folien vor deren weiterer Verarbeitung durch Walzen bei erhöhter Temperatur, beispielsweise bei 150 bis 190 °C weiter reduziert werden, obwohl dies im allgemeinen nicht erforderlich ist. Die dem Tiefzieh-Schritt zuzuführenden Folien weisen eine maximale Dicke von 1,0 mm, vorzugsweise von 0,1 bis 1 mm und insbesondere von 0,3 bis 0,8 mm, auf.

Unter "Vakuumtiefziehen" im Sinne des erfindungsgemäßen Verfahrens sind beliebige, an sich bekannte, Techniken zu verstehen, bei denen unter der Einwirkung von höheren Temperaturen und Vakuum die ursprüngliche, folienartige Formgestalt des als Ausgangsmaterial eingesetzten Polyisocyanat-Polyadditionsprodukts verändert wird. Das Verfahren und die gebräuchlichen technischen Einrichtungen sind beispielsweise von G. Gruenwald in "Thermoforming", Technomic Publ. Co. Inc., Lancaster, Basel (1987), beschrieben.

Die erfindungsgemäße Innenauskleidung der Kunststoff-Formen durch Vakuumtiefziehen erfolgt bei oberhalb 20°C, vorzugsweise bei 100 bis 200°C und insbesondere 130 bis 180°C liegenden Temperaturen der der Tiefziehbehandlung zu unterziehenden Folien, wobei während des Vakuumtiefziehens im allgemeinen ein absoluter Druck, d.h. ein Vakuum von 0,01 bis 1.000, vorzugsweise 0,1 bis 500 mbar, zur Anwendung gelangt. Unter diesen Bedingungen ist im allgemeinen eine Innerauskleidung der Formen innerhalb eines Zeitraums von 2 bis 10 Sek. möglich. Da andererseits bei der Herstellung der Folien nach dem Reaktionsspritzgußverfahren ebenfalls nur sehr kurze Formstandzeiten von ca. 30 bis 45 Sek. erforderlich sind, stellt das Verfahren einen einfachen für die Serienproduktion geeigneten Weg zur Innenauskleidung von Kunststoff-Formen mit hochwertigem Folienmaterial dar.

Die Erhitzung der Folien auf die während des Tiefziehvorgangs erforderliche Temperatur kann beispielsweise berührungslos mittels Infrarot-Strahlern konvektiv, induktiv oder durch Mikrowellenbestrahlung erfolgen.

Das erfindungsgemäße Verfahren eignet sich zur Innenauskleidung von beliebigen Kunststoff-Formen, wie sie bei der Herstellung von Kunststoff-Formkörpern zur Anwendung gelangen. Die erfindungsgemäß ausgekleideten Formen können mit beliebigen Kunststoffen oder beliebigen zu Kunststoffen ausreagierenden Reaktionsgemischen gefüllt werden. Vorzugsweise werden die erfindungsgemäß vorbehandelten Formen zur Herstellung von weichen bis halbharten Folien-Verbundschaumstoffen aus Urethan- und/oder Harnstoffgruppen aufweisenden Polyisocyanat-Polyadditionsprodukten verwendet, wobei die Schaumstoffe im allgemeinen eine Rohdichte von 0,05 bis 0,8 g/cm$^3$ aufweisen. Die Herstellung derartiger Schaumstoffe gehört zum an sich bekannten Stand der Technik und ist beispielsweise in "Kunststoff-Handbuch", Band VII, von Vieweg und Höchtlen, Carl Hanser Verlag, München (1966), beschrieben.

Die unter erfindungsgemäßer Verwendung der nach dem erfindungsgemäßen Verfahren ausgekleideten Formen hergestellten Folien-Verbundkunststoffe eignen sich beispielsweise im Automobilbau als Abdeckungen für Armaturentafeln, Schaltkonsolen, Türinnenverkleidungen, Dachhimmelinnenverkleidungen, Mittelkonsolen, Sonnenblenden oder allgemein zur Herstellung von Sitzen, Sesseln oder anderen weichen Sitzmöbeln, zur Herstellung geschäumter Kissen, Matrazen oder für ähnliche Einsatzgebiete.

In den nachfolgenden Beispielen beziehen sich alle Prozentangaben auf Gewichtsprozente.

Beispiel 1

(Herstellung eines Polyisocyanat-Polyadditionsprodukts)

Die nachstehend genannte Rezeptur wurde wie folgt verarbeitet:
Maschine: Laborkolbendosiergerät Form: Plattenform aus Stahl der inneren Abmessung 300·200·3.5 mm, so daß eine Platte bzw. Folie mit einer Stärke von 0,5 mm erhalten wird.
Mischkopf: MQ 8 der Firma Hennecke, St. Augustin
Arbeitsdruck: 180 bar
Einfüllzeit 1 Sek.
Rohstoff-Temperaturen:    35°C    (A-Komponente)
30°C (B-Komponente)
Formtemperatur: 50°C
Formstandzeit: 30 Sek.

Die Innenwände der Form wurden vor der Herstellung des Formkörpers mit einem handelsüblichen äußeren Formtrennmittel (RCTW der Fa. Chemtrend) beschichtet.

A-Komponente:

Abmischung von
70,5 Gew.-Teilen eines handelsüblichen, trifunktionellen Aminopolyethers der NH-Zahl 34 mit primären Aminogruppen (®Jeffamine T 5000 der Firma Texaco),
5,0 Gew.-Teilen eines handelsüblichen, trifunktionellen Aminopolyethers der NH-Zahl 387 mit primären Aminogruppen (®Jeffamine T 403 der Firma Texaco),
5,0 Gew.-Teilen Schwarzpaste N (Bayer AG),
15,0 Gew.-Teilen 4,4'-Diamino-3,3-dimethyl-dicyclohexylmethan,
1,0 Gew.-Teile eines handelsüblichen Lichtschutzmittels (®Tinuvin 765 der Firma Ciby-Geigy),
2,0 Gew.-Teilen Phenyl-di-(decylphenyl)-phosphit.

B-Komponente:

Semiprepolymer aus 1-Isocyanato-3,3,5-trimethyl-5-isocyanatomethyl-cyclohexan und einem Polyethertriol der OH-Zahl 29, hergestellt durch Propoxylierung von Trimethylolpropan. Das NCO-Semiprepolymer wies einen NCO-Gehalt von 30 % auf.

Die Komponenten wurden im Gewichtsverhältnis A:B = 100:32 (entsprechend einer Kennzahl von 110) miteinander vermischt.
Mechanische Daten: (Nachtemperung während 1,5 h bei 130°C)
Raumgewicht:
1,005 g/ccm
Zugfestigkeit (DIN 53 504):
20 MPa
Bruchdehnung (DIN 53 504):
160 %
G'-Modul (80°C) (DIN 53 445):

5 MPa
Zug-E-Modul RT (DIN 53 457:
30 MPa.

Beispiel 2 (erfindungsgemäßes Verfahren)

Die gemäß Beispiel 1 hergestellte Folie wurde auf einer handelsüblichen Vakuum-Tiefziehanlage (Firma Hydrochemie, Zürich, Modell Formvac AA) verarbeitet.

Zur Anwendung kam eine Negativ-Form eines Kastens der Abmessung 10 x 20 x 3 cm. Die Folie wurde im Abstand von 7 cm mit maximaler Leistung des eingebauten IR-Strahlers für 55 Sek. aufgeheizt (ca 160° C) und danach sofort durch Anlegen von Vakuum (ca. 100 mbar) tiefgezogen. Auf diese Weise wurde eine einwandfreie Innenauskleidung der Kastenform erzielt, die beispielsweise mit einem zu einem Polyurethanschaumstoff ausreagierenden Reaktionsgemisch zwecks Herstellung eines Folien-ummantelten Schaumstoff-Formkörpers befüllt werden kann.

Beispiel 3

Zur Anwendung gelangte erneut eine gemäß Beispiel 1 hergestellte Folie und eine Negativ-Halb-Form der Nachbildung der Büste der ägyptischen Königin Nofretete (Höhe 15 cm), die tiefe und flache Ausformungen mit stark und schwach gekrümmten Kanten und Ecken aufweist, was eine besonders gute Beurteilung des Tiefziehprozesses ermöglicht. Unter den Bedingungen gemäß Beispiel 2 resultierte auch hier eine Form mit einer einwandfreien Folien-Innenverkleidung.

**Patentansprüche**

1. Verfahren zur Herstellung von Folien-Innenauskleidungen von Formen zur Herstellung von Folien-ummantelten Kunststoff-Formkörpern durch Vakuumtiefziehen bei oberhalb 20° C liegenden Temperaturen unter Verwendung von quasi-thermoplastischen Folien einer maximalen Dicke von 1 mm, dadurch gekennzeichnet, daß man als quasi-thermoplastische Folien solche auf Basis von Polyisocyanat-Polyadditionsprodukten einer Dichte von mindestens 0,6 $g/cm^3$ verwendet, die durch Umsetzung von

    a) organischen Polyisocyanaten,

    b) Verbindungen mit einem Molekulargewicht von 1.800 bis 12.000, welche im statistischen Mittel mindestens 2,5 gegenüber Isocyanatgruppen reaktionsfähige Gruppen aufweisen,

gegebenenfalls

    c) Diaminen mit zwei primären und/oder sekundären, aromatisch gebundenen Aminogruppen des Molekulargewichtsbereichs 108 bis 400,

sowie gegebenenfalls

    d) gegebenenfalls Ethergruppen aufweisenden (Cyclo)-alkanpolyolen und/oder (Cyclo)-alkanpolyaminen des Molekulargewichtsbereichs 60 bis 1799,

sowie gegebenenfalls

    e) den aus der Polyurethanchemie an sich bekannten Hilfs- und Zusatzmitteln,

unter Einhaltung einer Isocyanatkennzahl von 60 bis 140 im Reaktionsspritzgußverfahren unter Verwendung von geschlossenen Plattenformen einer maximalen Höhe von 1 mm hergestellt worden sind, mit der Maßgabe, daß mindestens eine der Komponenten c) und/oder d) in einer solchen Menge mitverwendet wird, daß die Gesamtmenge der Komponenten c) und/oder d) mindestens 5 Gew.-%, bezogen auf das Gewicht der Komponente b), beträgt.

2. Verfahren gemäß Anspruch 1, dadurch gekennzeichnet, daß man den Vakuumtiefziehvorgang bei Temperaturen von 100 bis 200° C durchführt.

3. Verfahren gemäß Anspruch 1 und 2, dadurch gekennzeichnet, daß man die dem Vakuumtiefziehvorgang zuzuführende Folie vor und/oder während des Tiefziehvorganges berührungslos erwärmt und der Tiefziehvorgang durch Anwendung eines absoluten Drucks von 0,01 bis 1.000 mbar erfolgt.

4. Verwendung der gemäß Anspruch 1 bis 3 erhaltenen Folien-innenverkleideten Formen zur Herstellung von Folien-ummantelten Kunststoff-Formteilen.

5. Verwendung gemäß Anspruch 4 zur Herstellung von Folien-ummantelten weichen bis halbharten Schaumstoff-Formteilen des Dichtebereichs 0,05 bis 0,8 $g/cm^3$ aus Urethan- und/oder Harnstoffgruppen aufweisenden Polyisocyanat-Polyadditionsprodukten.